# EUROPEAN PATENT SPECIFICATION

(11) **EP 3 169 204 B1**
(45) Date of publication and mention of the grant of the patent: **09.10.2019**
(21) Application number: 15730097.1
(22) Date of filing: 10.06.2015
(51) Int. Cl.: A47J 43/04, A47J 43/25, A47J 19/02

(54) **KITCHEN APPLIANCE FOR PROCESSING FOODSTUFF**
KÜCHENGERÄT ZUR VERARBEITUNG VON LEBENSMITTELN
APPAREIL DE CUISINE POUR LA TRANSFORMATION DE PRODUITS ALIMENTAIRES

(30) Priority: 18.07.2014 DE 102014214084
(43) Date of publication of application: 24.05.2017
(73) Proprietor: PI-Design AG, 6234 Triengen (CH)
(72) Inventor: BODUM, Jørgen, CH-6045 Meggen (CH)
(74) Representative: Westphal, Mussgnug & Partner Patentanwälte mbB
(86) International application number: PCT/EP2015/062928
(87) International publication number: WO 2016/008651

(56) References cited:
- DE-A1- 3 319 513
- FR-A1- 2 578 160
- US-A1- 2007 030 758

## Description

The present invention relates to a kitchen appliance for processing foodstuff, in particular for processing vegetables and fruit, comprising a housing defining a hollow space and a longitudinal axis, the longitudinal axis (L) running substantially vertically, a motor located inside the hollow space, control means for activating and deactivating the motor, a motor output shaft connected to the motor for transmitting the output power provided by the motor and a coupling section for coupling attachments for processing the foodstuff to the kitchen appliance. Kitchen appliances of this kind are known and are employed in many applications. A broad range of attachments is available for processing different kind of foodstuff in different ways. Examples for foodstuffs to be processed are potatoes, beetroots or carrots that are grated to slices or pieces. Another example is the extraction of juice from fruits by a juicer. A particular attachment is shown in WO 2005/122855 A1 that is used for pasta making. All attachments are releasably connectable to kitchen appliances and use the output power provided by the motor of the kitchen appliance and transmitted by the motor output shaft. A rotatable tool is connectable to the motor output shaft in a torque proof manner as also shown in WO 2005/122855 A1. Further kitchen appliance for processing foodstuff are disclosed in DE 33 19 513 A1, US 2007/0030758 A1 and DE 34 47 010 A1.

A disadvantage of these kinds of kitchen appliances is that they take up a fairly large amount of space and are relatively heavy to avoid any tilting during operation. The area the kitchen appliance occupies on the work surface is also described as footprint. Large footprints are a particular disadvantage when the available working space is limited which is often the case in home kitchens. Moreover, the heavy weight of known kitchen appliances makes it difficult and cumbersome to move the kitchen appliance from the work surface to a cupboard or another storage place when not in use.

It is thus an object of the present invention to provide a kitchen appliance as initially described that in comparison to known kitchen appliances has a smaller footprint and a significantly reduced weight and is still safely operable.

The problem is solved by a kitchen appliance according to claim 1. Advantageous embodiments are defined in the sub-claims.

The inventive kitchen appliance comprises a further output shaft transmitting the output power to the coupling section and a gear mechanism for transmitting the output power from the motor output shaft to the further output shaft, wherein the motor and/or the motor output shaft are arranged so that they form an angle in the range of 5 to 60° and in particular between 15 and 45° and most preferably between 20 and 30° relative to the longitudinal axis. The motor output shaft and the motor are running through a plane defined by the longitudinal axis and the further output shaft is running perpendicular to the plane.

It is within the knowledge of the skilled person may combine the given upper and lower limits when solving the problem to save space. In many known kitchen appliances the gear mechanism does not change the direction of the power train so that the motor is arranged around the mounting axis of the output shaft. This linear arrangement puts a lot of constraints on the design of the housing and typically prevents a space saving design.

In contrast to that the inventive design comprising the motor output shaft, the further output shaft and the gear mechanism allows for the inclined arrangement of the motor and/or the motor output shaft relative to the longitudinal axis. The motor output shaft refers to the output shaft the motor is directly interacting with. Preferably, the motor and the motor output shaft are arranged around a common mounting axis. The gear mechanism may comprise a bevel gear that allows for the angled arrangement of the motor output shaft and the motor relative to the longitudinal axis. The motor can thus be arranged within the housing in a space saving way and the volume encompassed by the housing can be used in a more efficient way. As a consequence the size of the housing and concomitantly the weight can be reduced.

It is intended to use plastic for as many parts as possible although the use of metal is also an option. However, the inventive kitchen appliance is preferably designed for the use of plastic. Although all technically suitable kinds of plastic may be used, food safe plastics are preferred. In particular the plastics should be free of BPA (bisphenol A).

In the inventive kitchen appliance the motor output shaft and the motor are running through a plane defined by the longitudinal axis. This arrangement allows for a relatively symmetrical design of the housing that facilitates the manufacturing process. Moreover, the further output shaft is running perpendicular to the plane. The longitudinal axis runs substantially vertical when the kitchen appliance is placed on the work surface. The same is true for the plane defined by the longitudinal axis. As a consequence the second output is running substantially horizontally. It is thus possible to horizontally arrange the mounting axis of the attachments which leads to a natural and intuitive way of processing foodstuff facilitating the operation of the kitchen appliance and attachments.

A preferred embodiment of the inventive kitchen appliance is characterized in that the gear mechanism comprises a worm gear. In case bevel gears are used the cones are located at the free end of the shafts. Thus the shafts have to be able to transmit a certain amount of side loads and the bearings have to be configured accordingly. In contrast to that a worm gear allows for the arrangement of bearings on both sides of the contact area between the motor output shaft and the further output shaft so that a reduced amount of side loads is acting on the motor output shaft. At the same time the motor output shaft can be fairly long but still of relatively low diameter. The dimension of the output shafts and the bearings can be reduced leading to a decreased weight and reduced size. According to the invention the gear transmission ratio will not be changed mechanically. In case the output power of the motor is to be changed, the revolution of the motor is adjusted accordingly.

In an advantageous embodiment the housing has a conical shape with a diameter decreasing from the base to the top. The amount of material needed for the housing can be reduced but at the same time the surface area at the base can be kept large enough to reduce the risk of tilting of the kitchen appliance during operation. In particular in combination with the worm gear it is possible to arrange the motor in the lower region of the housing where more space is available. As the motor is a fairly heavy part, the centre of gravity of the kitchen appliance is hereby lowered leading to a further stabilization of the kitchen appliance. As the worm gear offers the possibility to realize a fairly high gear transmission ratio within a small volume the worm gear can be placed in the higher region of the housing, the distance being bridged by the motor output shaft. The available space is thus used in an efficient way.

The inventive kitchen appliance is further developed by a suction cup for stabilizing the kitchen appliance when placed on a surface. Suction cups provide a relatively easy possibility to releasably connect the kitchen appliance to the surface of a working surface without the need to employ motors or other power consuming components. Moreover, suction cups do not take up much space so that the housing does not need to be enlarged. Due to the force developed by the suction cup the housing is pressed against the work surface so that in particular the risk of tilting of the housing during the operation is significantly reduced.

Another preferred embodiment is characterized in that the suction cup is interacting with an activation mechanism for selectively activating and deactivating the suction cup. Many suction cups are activated simply by pressing them against a surface. Although they fulfill their task of stabilizing the connected unit it is difficult to remove the connected unit form the surface. In case an activation mechanism is used it is easy for the user to activate and deactivate the suction cup. Once deactivated, the kitchen appliance can easily be removed from the work surface. Thus the inventive activation mechanism clearly contributes to the inventive goal to provide a kitchen appliance that is easily movable from one place to another.

The activation mechanism advantageously comprises a lever pivotally mounted on the housing. A lever is a simple means by which the user can exert a relatively large force on the suction cup with relatively small effort. The technical implementation is relatively easy. Moreover, the lever can be designed in a way that breakage or wear are unlikely.

Preferably, the activation mechanism comprises an retention arm arranged between the lever and the suction cup. The retention arm permits the transfer of the force provided by the lever to the suction cup that may be located at a fairly large distance from the lever. Hence, the positions of the suction cup and the lever relative to the housing can be chosen without many constraints. As a consequence, the arrangement of the motor and the output shafts can also be chosen more freely, thereby contributing to the inventive goal to provide a housing with a reduces footprint and taking up reduced space.

Beyond that the retention arm is linearly movable within the housing thereby activating or deactivating the suction cup. Parts that perform linear movements are usually easier to support than parts performing turning movements. The technical implementation is thus simplified contributing to a cost-saving manufacturing process and a reliable operation of the kitchen appliance.

Preferably, the retention arm comprises first guiding means that interact with corresponding second guiding means arranged in the housing for ensuring the linear movement of the retention arm. In the simplest form the guiding means may be protrusions or ribs that are interacting with recesses. Again, the technical implementation is further simplified contributing to a cost-saving manufacturing process and a reliable operation of the kitchen appliance.

In an advantageous embodiment the retention arm is interacting with a spring biasable by the movement of the retention arm. As an example, the spring can be biased when the suction cup is activated by turning the lever. Hence, the spring provides a certain feedback to the user that the activation action is successful. When deactivating the suction cup the spring relaxes and supports the deactivating movement of the lever. Thus the activation and deactivation is user-friendly.

In addition the retention arm may comprise a cylindrical section where the suction cup is connected to the retention arm, the cylindrical section being surrounded by the spring. A cylindrical section is very common where one part has to be connected to another part and is easy to provide. Additional fixing means for the spring are not needed. If needed, the cylindrical section may completely or partially be made of a more resistant material than the other parts, e.g., metal. The additional weight can be kept within small limits. Moreover, the cylindrical section is used to guide the spring so that it cannot be bent in an uncontrolled and harmful way so that the spring is prevented from being damaged.

Beyond that, the lever comprises a number of first sliding surfaces interacting with a number of second sliding surfaces arranged on the retention arm for converting the pivoting movement of the lever into a linear movement of the retention arm. When a pivoting or turning movement is converted to a linear movement alternating relative movements between the two parts have to be balanced. Providing sliding surfaces is one very easy way to accomplish this balance. In the present case the friction losses generated by the sliding movement between the two sliding surfaces are tolerable as the lever is operated by the user of the kitchen appliance and no electrical or chemical energy needs to be provided. In contrast, the friction losses provide a feedback to the user that the activation of the suction cup is successful.

In a preferred embodiment of the inventive kitchen appliance the suction cup is seated on a sealing face located on a first protrusion of the housing, the first protrusion forming an annular space with a second protrusion of the housing located radially outwardly of the first protrusion. The suction cup may slightly protrude beyond the housing so that it is the first part of the kitchen appliance contacting the working surface. The suction cup forms an annular contact surface that is interacting with the sealing surface. When placed on a working surface the weight of the kitchen appliance is compressing the suction cup between the sealing face and the working surface in an airtight manner. The annular space can be used e.g. to store an electrical cable when the kitchen appliance is not in use. The preferably cylindrical first protrusion serves as a guide for coiling up the cable whereas the preferably ring shaped second protrusion serves as a support of the housing and is contacting the work surface. In this embodiment the cable is neatly stored without the need of additional space. Moreover, as the cable can be partly or completely drawn off from the first protrusion the length of the drawn-off cable can be adjusted to the distance to the next plug socket. Hence a cable tidy is realized.

In addition the housing forms an housing recess located below the coupling section, the lever being arranged in the housing recess. As stated above, the coupling section serves for connecting attachments used for processing foodstuffs. When the kitchen appliance is operated bowls or other containers for receiving the processed foodstuffs will be placed below the attachments. The attachments are typically equipped with an outlet for the processed foodstuff located at a certain distance from the housing or the kitchen appliance. Providing an housing recess below the coupling section has the advantage that the containers can be placed closer to the housing and the kitchen appliance so that the processed foodstuff can be transferred to the container more centrically. The curvature of the housing recess can be chosen so that it corresponds to the shape of a bowl. When the bowl is contacting the housing recess the bowl is in a position in which the foodstuffs are securely received by the bowl. Hence the housing recess serves as a location point to the user. Moreover, the extension of the attachments can be reduced so that they need less space.

The activation mechanism is preferably arranged in a way that the lever protrudes from the housing when the suction cup is not activated. As a consequence the lever obstructing the container placed underneath the outlet for the processed foodstuff. The user is thereby encouraged to activate the suction cup by pressing the lever towards the housing so that it does not obstruct the movements of container anymore. As the activated suction cup stabilizes the kitchen appliance this arrangement of the lever contributes to the safe operation of the kitchen appliance.

Furthermore, the housing comprises a base unit and a main unit, the activation mechanism and the suction cup being mounted on the base unit. The two part design of the housing facilitates the access to the interior of the housing, thereby also simplifying the manufacturing process. The base and the main units may be releasably connectable to each other permitting the replacement of broken or worn parts without destroying the housing. Mounting the activation mechanism and the suction cup on the base unit has the advantage that the main unit can be designed in a very simple fashion and is not involved in the mounting of the suction cup and the activation mechanism. As a consequence the suction cup and the activation mechanism can completely be mounted before the main unit is connected to the base unit. The assembly and the disassembly are thereby simplified.

Preferably that the coupling section comprises of a bayonet coupling and a spring loaded catch for connecting and positioning the attachment to the kitchen appliance. A bayonet coupling provides a simple closure for connecting the attachments to the housing. However, a bayonet coupling does not completely prevent the loosening of the attachments during the operation since the rotation of the attachments inside the bayonet closing is possible, although typically limited by friction. The spring loaded catch is engaging with the attachments when properly connected with the housing and prevents the rotation of the attachments. The spring ensures that the catch stays in the engaged position. For releasing the attachment from the housing a catch release button has to be pressed, thereby moving the catch against the effective direction of the spring. The safe operation of the kitchen appliance is thereby supported.

In the following the invention is further described by means of a preferred embodiment with reference to the accompanying drawings.
- Figure 1a): is a top view on the inventive kitchen appliance,
- Figure 1b): is a cross section through the kitchen appliance along the plane A-A defined in Figure 1a),
- Figure 2a): is a top view on the inventive kitchen appliance with a deactivated suction cup,
- Figure 2b): is a cross section through the kitchen appliance along the plane B-B defined in Figure 2a),
- Figure 3a): is a top view on the inventive kitchen appliance with an activated suction cup,
- Figure 3b): is a cross section through the kitchen appliance along the plane C-C defined in Figure 3a),
- Figure 4a): is a perspective view of a activation mechanism and the suction cup,
- Figure 4b): is a perspective view of a base unit of the housing and the mounted activation mechanism,
- Figure 4c): is a bottom view of the kitchen appliance,
- Figure 5: is a side view of the kitchen appliance with an attachment coupled.

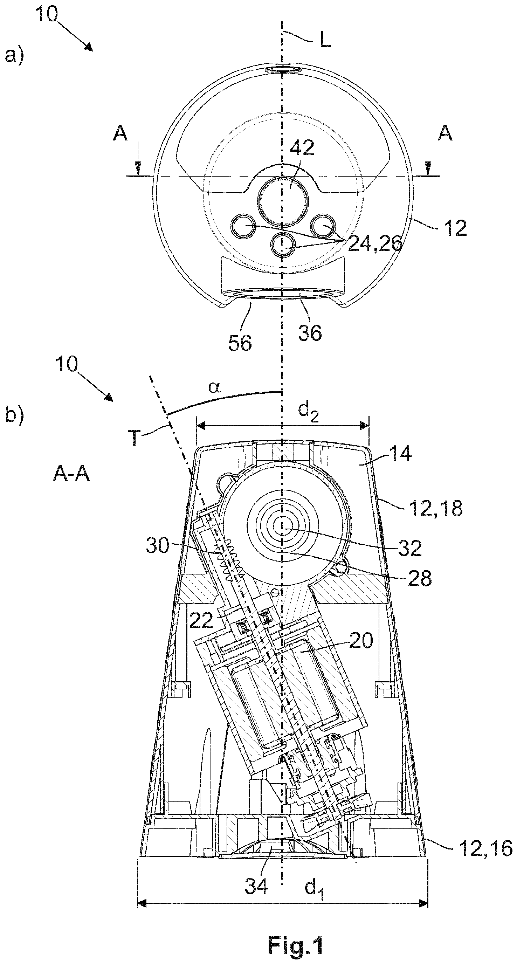

In Figure 1a) a top view on an inventive kitchen appliance 10 and in Figure 1b) a cross section through the kitchen appliance 10 along the plane A-A defined in Figure 1a) are shown. The kitchen appliance 10 comprises a housing 12 defining a hollow space 14 or an interior space. The housing 12 consists of two parts, namely a base unit 16 and a main unit 18. The housing 12 has a conical shape with a first diameter d₁ at the bottom and a second diameter d₂ at the top. The second diameter d₂ is smaller than the first diameter d₁.

A motor 20, here an electromotor 20, is arranged within the hollow space 14 and connected to a motor output shaft 22. The motor 20 can be activated and deactivated by control means 24 that comprise control buttons 26 located on the top of the housing 12. In the shown embodiment the kitchen appliance 10 is equipped with three control buttons 26. One control button sets the motor 20 in a high speed, low torque mode, another control button sets the motor 20 in a low speed, high torque mode and one control button reverses the turning direction. The motor output shaft 22 is connected to a gear mechanism 28, in this case a worm gear 30, for transmitting the output power generated by the motor 20 to a further output shaft 32. The further output shaft 32 is running substantially perpendicular to the motor output shaft 22.

The housing 12 defines a longitudinal axis L that is substantially vertical when the kitchen appliance 10 is placed on a work surface. The motor 20 and the motor output shaft 22 are arranged along a common mounting axis T around which the motor output shaft 22 is turning. In the shown embodiment the mounting axis T and the longitudinal axis L include an angle α of approximately 20 to 30°. It would however also be possible to only arrange the motor 20 or the motor output shaft 22 in an angled way relative to the longitudinal axis L without departing from the inventive concept.

Further, the kitchen appliance 10 is provided with a suction cup 34 connected to the housing 12 at the base unit 16.

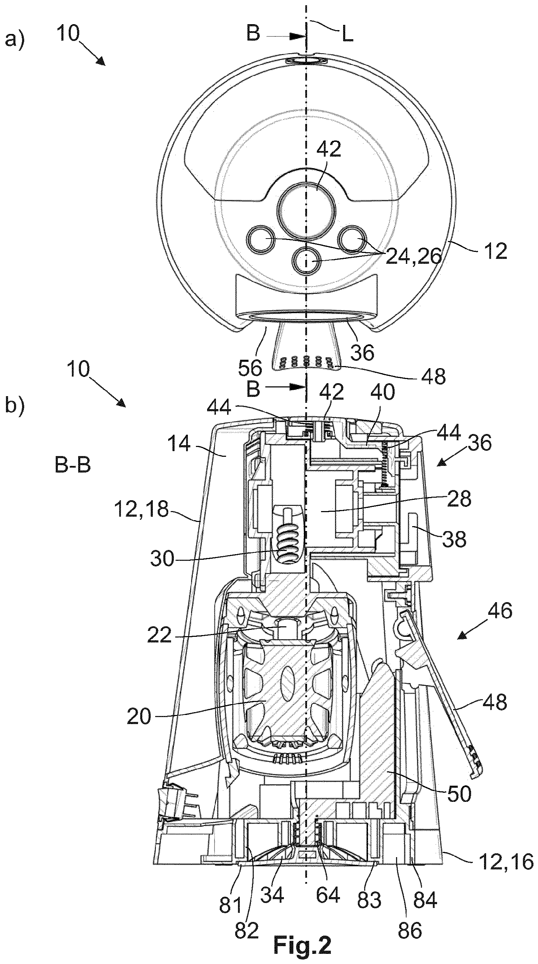

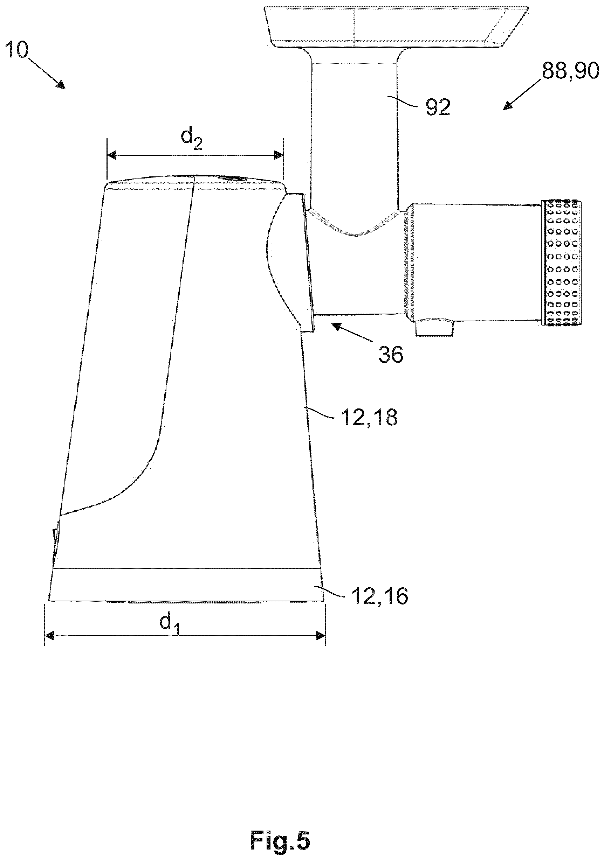

As best seen in Figures 2b) and 3b) the kitchen appliance 10 is equipped with a coupling section 36 for coupling attachments to the kitchen appliance 10 (also see Figure 5). The coupling section 36 comprises of a bayonet coupling 38 and a spring loaded catch 40 movable along the longitudinal axis L by pressing a catch release button 42 located at the top of the housing 12. In the shown example the catch release button 42 is integral with the spring loaded catch 40. The spring loaded catch 40 is interacting with two compression springs 44 urging the catch 40 in a position in which it engages with a portion (not shown) of the attachment. When engaged with the attachment the rotational movement of the attachment during the operation is prevented. In the shown embodiment the coupling section 36 is designed to receive a male section of a shaft provided by the attachment. The further output shaft 32 has thus a corresponding female reception that is not further shown. The female reception has the advantage that no turning parts are protruding from the kitchen appliance 10 preventing any harm to the user. They are engageable into each other so that the output power can be transferred to the connected attachments.

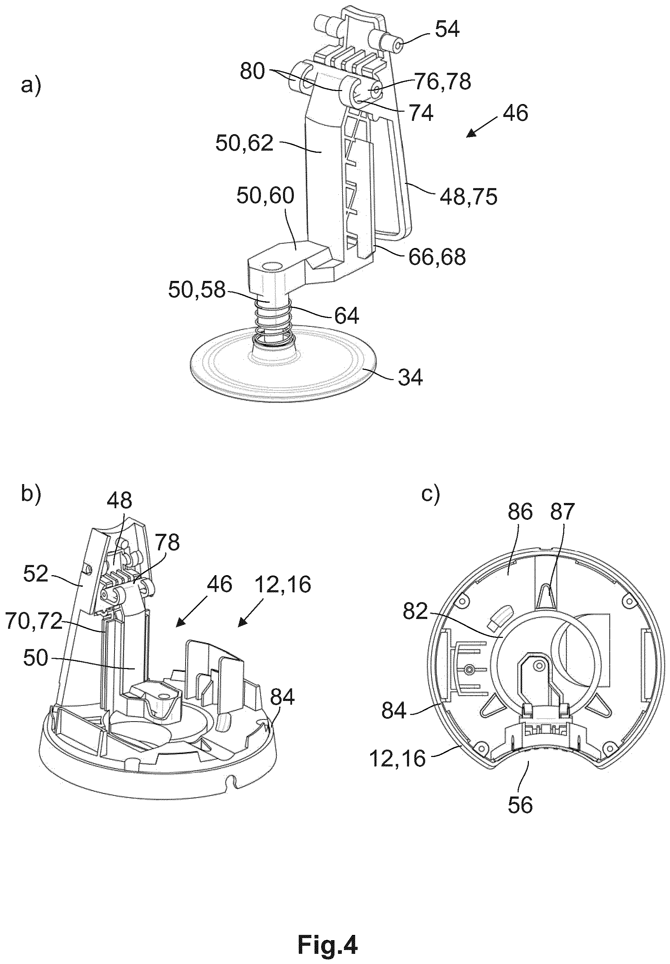

In Figures 4a) and 4b) an activation mechanism 46 is shown that serves for activating and deactivating the suction cup 34. The activation mechanism 46 comprises a lever 48 and a retention arm 50. The base unit 16 comprises a mounting section 52 on which the lever 48 is mounted by means of two cylindrical pivot arms 54 (Figure 4b)). The mounting section 52 is forming a housing recess 56 together with the main unit 18 of the housing 12 (see e.g. Figure 1a)). The retention arm 50 can be subdivided into three sections, namely a vertical cylindrical section 58, a horizontal flat section 60 and a vertical structured section 62. The suction cup 34 is connected to the retention arm 50 via the cylindrical section 58. A spring 64 is surrounding the cylindrical section 58 and is acting on one end against the suction cup 34 and on the other end against the housing 12. As can be best seen from Figure 4b) the lever 48 is mounted radially outwardly whereas the suction cup 34 is connected to the retention arm 50 in the center of the housing 12. Thus the horizontal flat section 60 bridges the radial distance. The vertical structured section 62 comprises bars that ensure that the forces and the torque introduced by the lever 48 are reliably transferred to the suction cup 34.

Referring to Figure 4a) the vertical structured section 62 is provided with first guiding means 66 embodied as ribs 68 protruding outwardly. The base unit 16 is provided with corresponding second guiding means 70 embodied as recesses 72 into which the ribs 68 engage to provide a linear movement of the retention arm 50 (see Figure 4b)).

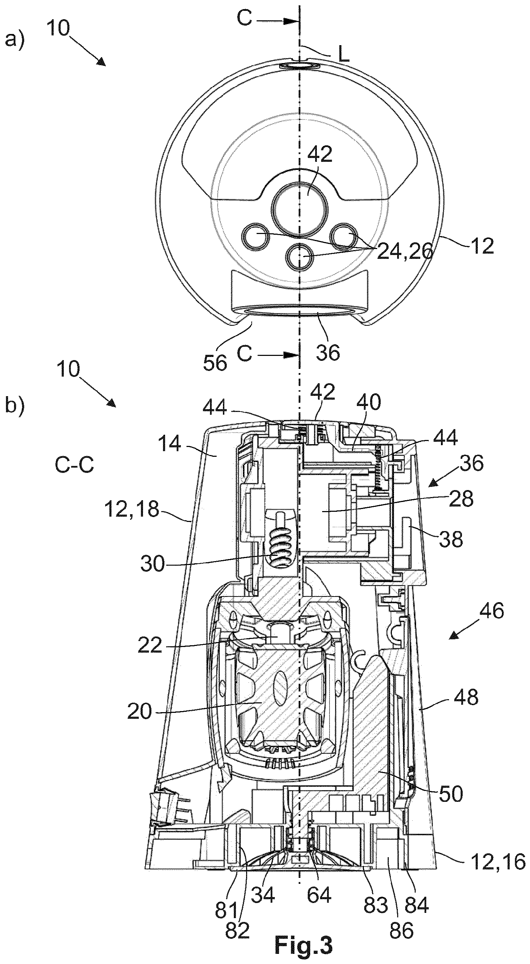

The lever 48 can be rotated between an unlocked position in which the suction cup 34 is deactivated (see Figures 2a) and 2b)) and a locked position in which the suction cup 34 is activated (see Figures 3a) and 3b)). In the unlocked position the lever 48 is protruding from the housing 12 and in particular from the housing recess 56 whereas in the locked position the lever 48 is aligned with the housing 12. In the locked position the lever 48 does not obstruct any objects located in the surroundings of the kitchen appliance 10. As best seen in Figure 4a) the lever 48 comprises two first sliding surfaces 74 extending substantially perpendicular from a main body 75 of the lever 48, the first sliding surfaces 74 interacting with two second sliding surfaces 76 of the retention arm 50 and in particular of the vertical structured section 62. The second sliding surfaces 76 are provided by a rod 78. In the deactivated position the rod 78 is abutting against a curved running surface 80 of the first sliding surfaces 74 thereby defining the unlocked position of the lever 48. The locked position is mainly defined by the housing 12 against which the lever 48 abuts. In the locked position the rod 78 is abutting against the main body 75 of the lever 48.

The kitchen appliance 10 is placed on a work surface with the lever 48 in its unlocked position. When moving the lever 48 from the unlocked position to the locked position the lever 48 is turned around an axis defined by the two pivot arms 54. As explained above, the retention arm 50 can only move along the longitudinal axis L. Due to the turning movement of the lever 48 the first sliding surface 74 is carrying out a movement parallel and perpendicular to the longitudinal axis L. As a consequence the retention arm 50 is moved along the longitudinal axis L and the rod 78 is moved between the curved section 80 and the main body 75 of the lever 48. When the lever 48 is moved towards the housing 12 the turning movement is converted into an upward linear movement of the retention arm 50.

As best seen in Figure 4c) the base unit 16 comprises of a first protrusion 82 that has a substantially cylindrical shape and a second protrusion 84 having a ring-shaped second protrusion 84. The protrusions 82, 84 form an annular space 86 in which an electric cable for supplying electrical energy to the motor 20 can be stored. Supporting sections 87 located on the first portion facilitate the coiling of the electric cable around the first protrusion 82. In addition the first protrusion 82 forms a sealing face 83 on which a contact surface 81 of the suction cup 34 is seated. In the unlocked position the suction cup 34 is slightly protruding from the base unit 16 so that it is the first part of the kitchen appliance 10 contacting the working surface. Due to the self-weight of the kitchen appliance 10 the suction cup 34 is compressed between the working surface and the sealing surface 83 at its contact surface 81. The contact surface 81 contacts the work surface in an airtight manner, thereby comprising a certain volume of air. As the suction cup 34 is connected to the retention arm 50 the upward movement lifts the center of the suction cup 34 whereas its contact surface 81 is interacting with the housing 12 and remains in its original position (see Figures 2b), 3b)). When the center of the suction cup 34 is lifted the volume comprised by the suction cup 34 is enlarged. As no additional air can pass the contact surface 81 the pressure inside the suction cup 34 decreases and thus the housing 12 is pressed against the work surface thereby stabilizing the kitchen appliance 10.

Additionally, the lifting movement biases the spring 64 so that a force is generated trying to move the retention arm 50 downwards. As this force is also transmitted to the lever 48 it contributes the movement of the lever 48 into the unlocked position. As a result the user basically only has to slightly pull the lever 48 out of the locked position and the force provided by the spring 64 will move the lever 48 into the unlocked position. The retention arm 50 is thereby moved downwards so that the suction cup 34 returns to its original position. The volume comprised by the suction cup 34 is reduced and thus no force is acting between the housing 12 and the work surface anymore. In the deactivated position the kitchen appliance 10 can be lifted from the work surface and placed on a cupboard for storage.

In Figure 5 the kitchen appliance 10 is shown by means of a side view. An attachment 88, in this case a masticating juicer 90, is connected to the kitchen appliance 10. The masticating juicer 90 comprises a content input 92, e.g., for apples or other fruits. A plunger (not shown) may be used to press the fruit into the juicer 90. As the content input 92 is eccentric from the longitudinal axis L a turning moment is introduced trying to tilt the kitchen appliance 10. However, as the suction cup 34 is providing a force pressing the housing 12 against the work surface the kitchen appliance 10 is stabilized will not tilt in spite of its low footprint and low weight.

### Reference signs

- 10: kitchen appliance
- 12: housing
- 14: hollow space
- 16: base unit
- 18: main unit

- 20: motor
- 22: motor output shaft
- 24: control means
- 26: control button
- 28: gear mechanism

- 30: worm gear
- 32: further output shaft
- 34: suction cup
- 36: coupling section
- 38: bayonet coupling

- 40: spring loaded catch
- 42: catch release button
- 44: compression springs
- 46: activation mechanism
- 48: lever

- 50: retention arm
- 52: mounting section
- 54: pivot arm
- 56: housing recess
- 58: cylindrical section

- 60: flat section
- 62: structured section
- 64: spring
- 66: first guiding means
- 68: rib

- 70: second guiding means
- 72: recess
- 74: first sliding surface
- 75: main body
- 76: second sliding surface
- 78: rod

- 80: curved section
- 81: contact surface
- 82: first protrusion
- 83: sealing face
- 84: second protrusion
- 86: annular space
- 87: support sections
- 88: attachment

- 90: masticating juicer
- 92: content input

- d₁: first diameter
- d₂: second diameter
- L: longitudinal axis
- T: mounting axis

- α: angle

## Claims

1. Kitchen appliance for processing foodstuff, in particular for processing vegetables and fruit, comprising
- a housing (12) defining a hollow space (14) and a longitudinal axis (L), the longitudinal axis (L) running substantially vertically,
- a motor (20) located inside the hollow space (14),
- control means (24) for activating and deactivating the motor (20),
- a motor output shaft (22) connected to the motor (20) for transmitting the output power provided by the motor (20),
- a coupling section (36) for connecting attachments (88) for processing the foodstuff to the housing (12),
- a further output shaft (32) transmitting the output power to the coupling section (36), and
- a gear mechanism (28) for transmitting the output power from the motor output shaft (22) to the further output shaft (32), wherein
- the motor (20) and the motor output shaft (22) are arranged so that they form an angle (α) in the range of 5 to 60° and in particular between 15 and 30° relative to the longitudinal axis (L),
**characterized in that**
the motor output shaft (22) and the motor (20) are running through a plane defined by the longitudinal axis (L) and
the further output shaft (32) is running perpendicular to the plane.

2. Kitchen appliance according to claim 1,
**characterized in that** the gear mechanism (28) comprises a worm gear (30).

3. Kitchen appliance according to one of the preceding claims,
**characterized in that** the housing (12) has a conical shape with a diameter decreasing from the base to the top.

4. Kitchen appliance according to one of the preceding claims
**characterized by** a suction cup (34) for stabilizing the kitchen appliance (10) when placed on a surface.

5. Kitchen appliance according to claim 4,
**characterized in that** the suction cup (34) is interacting with an activation mechanism (46) for selectively activating and deactivating the suction cup (34).

6. Kitchen appliance according to claim 5,
**characterized in that** the activation mechanism (46) comprises a lever (48) pivotally mounted on the housing (12).

7. Kitchen appliance according to claim 6,
**characterized in that** the activation mechanism (46) comprises an retention arm (50) arranged between the lever (48) and the suction cup (34).

8. Kitchen appliance according to claim 7,
**characterized in that** the retention arm (50) is linearly movable within the housing (12) thereby activating or deactivating the suction cup (34).

9. Kitchen appliance according to claim 8,
**characterized in that** the retention arm (50) comprises first guiding means (66) that interact with corresponding second guiding means (70) arranged in the housing (12) for ensuring the linear movement of the retention arm (50).

10. Kitchen appliance according to one of the claims 7 to 9,
**characterized in that** the retention arm (50) is interacting with a spring (64) biasable by the movement of the retention arm (50).

11. Kitchen appliance according to claim 10,
**characterized in that** the retention arm (50) comprises a cylindrical section (58) where the suction cup (34) is connected with the retention arm (50), the cylindrical section (58) being surrounded by the spring (64).

12. Kitchen appliance according to one of the claims 6 to 11,
**characterized in that** the lever (48) comprises a number of first sliding surfaces (74) interacting with a number of second sliding surfaces (76) arranged on the retention arm (50) for converting the pivoting movement of the lever (48) into a linear movement of the retention arm (50).

13. Kitchen appliance according to one of the claims 5 to 12,
**characterized in that** the suction cup (34) is seated on a sealing face (83) located on a first protrusion (82) of the housing (12), the first protrusion (12) forming an annular space (86) with a second protrusion (84) of the housing (12) located radially outwardly of the first protrusion (12).

14. Kitchen appliance according to one of the claims 6 to 13,
**characterized in that** the housing (12) forms an housing recess (56) located below the coupling section (36), the lever (48) being arranged in the housing recess (56).

15. Kitchen appliance according to one of the claims 5 to 14,
**characterized in that** the housing (12) comprises a base unit (16) and a main unit (18), the activation mechanism (46) and the suction cup (34) being mounted on the base unit (16).

## Patentansprüche

1. Küchengerät zur Verarbeitung von Lebensmitteln, insbesondere zur Verarbeitung von Gemüse und Obst, umfassend
- ein Gehäuse (12), das einen Hohlraum (14) und eine Längsachse (L) definiert, wobei die Längsachse (L) im Wesentlichen vertikal verläuft,
- einen Motor (20), der innerhalb des Hohlraums (14) angeordnet ist,
- Steuermittel (24) zum Aktivieren und Deaktivieren des Motors (20),
- eine mit dem Motor (20) verbundene Motorabtriebswelle (22) zum Übertragen der vom Motor (20) bereitgestellten Ausgangsleistung,
- einen Kopplungsabschnitt (36) zum Verbinden von Aufsätzen (88) zur Verarbeitung des Lebensmittels mit dem Gehäuse (12),
- eine weitere Abtriebswelle (32), welche die Ausgangsleistung auf den Kupplungsabschnitt (36) überträgt, und
- ein Getriebe (28) zum Übertragen der Ausgangsleistung von der Motorabtriebswelle (22) auf die weitere Abtriebswelle (32), wobei
- der Motor (20) und die Motorabtriebswelle (22) so angeordnet sind, dass sie einen Winkel (α) im Bereich von 5 bis 60° und insbesondere zwischen 15 und 30° bezogen auf die Längsachse (L) bilden,
**dadurch gekennzeichnet, dass**
- die Motorabtriebswelle (22) und der Motor (20) durch eine von der Längsachse (L) definierte Ebene laufen und
- die weitere Abtriebswelle (32) senkrecht zur Ebene verläuft.

2. Küchengerät nach Anspruch 1,
**dadurch gekennzeichnet, dass** das Getriebe (28) ein Schneckengetriebe (30) umfasst.

3. Küchengerät nach einem der vorstehenden Ansprüche,
**dadurch gekennzeichnet, dass** das Gehäuse (12) eine konische Form mit einem Durchmesser aufweist, der von der Basis bis zur Oberseite abnimmt.

4. Küchengerät nach einem der vorstehenden Ansprüche
**gekennzeichnet durch** einen Saugnapf (34) zum Stabilisieren der Küchengerät (10), wenn sie auf einer Oberfläche angeordnet ist.

5. Küchengerät nach Anspruch 4,
**dadurch gekennzeichnet, dass** der Saugnapf (34) mit einem Aktivierungsmechanismus (46) zusammenwirkt, um den Saugnapf (34) selektiv zu aktivieren und zu deaktivieren.

6. Küchengerät nach Anspruch 5,
**dadurch gekennzeichnet, dass** der Betätigungsmechanismus (46) einen Hebel (48) umfasst, der schwenkbar an dem Gehäuse (12) montiert ist.

7. Küchengerät nach Anspruch 6,
**dadurch gekennzeichnet, dass** der Betätigungsmechanismus (46) einen Haltearm (50) umfasst, der zwischen dem Hebel (48) und dem Saugnapf (34) angeordnet ist.

8. Küchengerät nach Anspruch 7,
**dadurch gekennzeichnet, dass** der Haltearm (50) innerhalb des Gehäuses (12) linear beweglich ist, wodurch der Saugnapf (34) aktiviert oder deaktiviert wird.

9. Küchengerät nach Anspruch 8,
**dadurch gekennzeichnet, dass** der Haltearm (50) erste Führungsmittel (66) umfasst, die mit entsprechenden zweiten Führungsmitteln (70) zusammenwirken, die im Gehäuse (12) angeordnet sind, um die lineare Bewegung des Rückhaltearms (50) sicherzustellen.

10. Küchengerät nach einem der Ansprüche 7 bis 9,
**dadurch gekennzeichnet, dass** der Haltearm (50) mit einer Feder (64) zusammenwirkt, die durch die Bewegung des Haltearms (50) vorgespannt werden kann.

11. Küchengerät nach Anspruch 10,
**dadurch gekennzeichnet, dass** der Haltearm (50) einen zylindrischen Abschnitt (58) umfasst, in dem der Saugnapf (34) mit dem Haltearm (50) verbunden ist, wobei der zylindrische Abschnitt (58) von der Feder (64) umgeben ist.

12. Küchengerät nach einem der Ansprüche 6 bis 11,
**dadurch gekennzeichnet, dass** der Hebel (48) eine Anzahl von ersten Gleitflächen (74) umfasst, die mit einer Anzahl von zweiten Gleitflächen (76) zusammenwirken, die auf dem Haltearm (50) angeordnet sind, um die Schwenkbewegung des Hebels (48) in eine lineare Bewegung des Haltearms (50) umzuwandeln.

13. Küchengerät nach einem der Ansprüche 5 bis 12,
**dadurch gekennzeichnet, dass** der Saugnapf (34) auf einer Dichtfläche (83) sitzt, die auf einem ersten Vorsprung (82) des Gehäuses (12) angeordnet ist, wobei der erste Vorsprung (12) einen Ringraum (86) mit einem zweiten Vorsprung (84) des Gehäuses (12) bildet, der radial außerhalb des ersten Vorsprungs (12) angeordnet ist.

14. Küchengerät nach einem der Ansprüche 6 bis 13,
**dadurch gekennzeichnet, dass** das Gehäuse (12) eine Gehäuseaussparung (56) bildet, die unterhalb des Kupplungsabschnitts (36) angeordnet ist, wobei der Hebel (48) in der Gehäuseaussparung (56) angeordnet ist.

15. Küchengerät nach einem der Ansprüche 5 bis 14,
**dadurch gekennzeichnet, dass** das Gehäuse (12) eine Basiseinheit (16) und eine Haupteinheit (18) umfasst, wobei der Betätigungsmechanismus (46) und der Saugnapf (34) an der Basiseinheit (16) montiert sind.

## Revendications

1. Appareil ménager pour travailler des produits alimentaires en particulier des végétaux et des fruits comprenant :
- un boîtier (12) formant une cavité (14) et ayant un axe longitudinal (L), cet axe longitudinal (L) étant pratiquement vertical,
- un moteur (20) à l'intérieur la cavité (14),
- un moyen de commande (24) pour activer et désactiver le moteur (20),
- un arbre de sortie de moteur (22) relié au moteur pour transmettre la puissance fournie par le moteur (20),
- une section de couplage (36) pour relier des accessoires (88) pour traiter les produits alimentaires dans le boîtier (12),
- un autre arbre de sortie (32) transmettant la puissance de sortie à la section de couplage (36), et
- un mécanisme d'engrenage (28) pour transmettre la puissance de sortie de la roue de sortie (22) du moteur à l'autre arbre de sortie (32),
dans lequel
- le moteur (20) et l'arbre de sortie (22) du moteur sont disposés de façon à former un angle ( ) de l'ordre de 5° à 60° et en particulier compris entre 15° et 30° par rapport à l'axe longitudinal (L),
appareil **caractérisé en ce que**
l'arbre de sortie de moteur (22) et le moteur (20) coupent un plan défini par l'axe longitudinal (L), et
l'autre axe de sortie (32) est perpendiculaire au plan.

2. Appareil ménager selon la revendication 1,
**caractérisé en ce que**
le mécanisme d'engrenage (28) comprend une vis hélicoïdale (30) .

3. Appareil ménager selon l'une des revendications précédentes,
**caractérisé en ce que**
le boîtier (12) a une forme conique dont le diamètre diminue à partir de la base vers le sommet.

4. Appareil ménager selon l'une des revendications précédentes,
**caractérisé par**
une ventouse (34) pour stabiliser l'appareil (10) placé sur une surface.

5. Appareil ménager selon la revendication 4,
**caractérisé en ce que**
la ventouse (34) coopère avec un mécanisme d'actionnement (46) pour activer et désactiver sélectivement la ventouse (34) .

6. Appareil ménager selon la revendication 5,
**caractérisé en ce que**
le mécanisme d'activation (46) comporte un levier (48) monté pivotant dans le boîtier (12).

7. Appareil ménager selon la revendication 6,
**caractérisé en ce que**
le mécanisme d'activation (46) comporte un bras de retenue (50) entre le levier (48) et la ventouse (34).

8. Appareil ménager selon la revendication 7,
**caractérisé en ce que**
le bras de retenue (50) coulisse dans le boîtier (12) pour activer ou désactiver la ventouse (34).

9. Appareil ménager selon la revendication 8,
**caractérisé en ce que**
le bras de retenue (50) comporte un premier moyen de guidage (66) qui coopère avec un second moyen de guidage (70) correspondant, logé dans le boîtier (12) pour garantir le coulissement du bras de retenue (50).

10. Appareil ménager selon l'une des revendications 7 à 9,
**caractérisé en ce que**
le bras de retenue (50) coopère avec un ressort (64) comprimé par le mouvement du bras de retenue (50).

11. Appareil ménager selon la revendication 10,
**caractérisé en ce que**
le bras de retenue (50) a une section cylindrique (58), la ventouse (34) étant reliée au bras de retenue (50) et la section cylindrique (58) étant entourée par le ressort (64).

12. Appareil ménager selon l'une des revendications 6 à 11,
**caractérisé en ce que**
le levier (48) comporte un certain nombre de premières surfaces de glissement (74) coopérant avec un certain nombre de secondes surfaces de glissement (76) prévues sur le bras de retenue (50) pour transformer le mouvement de pivotement du levier (48) en un coulissement du bras de retenue (50).

13. Appareil ménager selon l'une des revendications 5 à 12,
**caractérisé en ce que**
la ventouse (34) est logée sur une surface d'étanchéité (83) située sur une première partie en saillie (82) du boîtier (12), la première partie en saillie (12) formant un espace annulaire (86) avec une seconde partie en saillie (84) du boîtier (12) située radialement à l'extérieur de la première partie en saillie (12).

14. Appareil ménager selon l'une des revendications 6 à 13,
**caractérisé en ce que**
le boîtier (12) forme une cavité de boîtier (56) sous la section de couplage (36), le levier (48) étant logé dans la cavité de boîtier (56).

15. Appareil ménager selon l'une des revendications 5 à 14,
**caractérisé en ce que**
le boîtier (12) comporte une unité de base (16) et une unité principale (18), le mécanisme d'activation (46) et la ventouse (34) étant logés dans l'unité de base (16).
